# EUROPÄISCHE PATENTANMELDUNG

(11) **EP 1 243 241 A2**
(43) Veröffentlichungstag der Anmeldung: **25.09.2002**
(21) Anmeldenummer: 02006287.3
(22) Anmeldetag: 20.03.2002
(51) Int. Cl.: A61G 13/10

(54) **Fahrgestell für einen Behandlungstisch, insbesondere für chirurgische Eingriffe**

(30) Priorität: 21.03.2001 DE 10113805
(71) Anmelder: Brustmann, Herbert, 82515 Wolfratshausen (DE)
(72) Erfinder: Brustmann, Herbert, 82515 Wolfratshausen (DE)
(74) Vertreter: Nöth, Heinz

(57) **Zusammenfassung**

Ein Fahrgestell für einen Behandlungstisch, insbesondere für chirurgische Eingriffe mit einem Fahrrollenpaar 1, 1, welches um eine vertikale Schwenkachse 2, 2 am Fahrgestellrahmen 3 schwenkbar gelagert ist, wobei zum ortsfesten Positionieren des Behandlungstisches am Boden 9 eine exzenterbetätigte Stopperfläche, die jeder Fahrrolle 1 zugeordnet ist, auf den Boden 9 aufsetzbar ist.

## Beschreibung

Die Erfindung betrifft ein Fahrgestell für einen Behandlungstisch, insbesondere für chirurgische Eingriffe mit einem Fahrrollenpaar, welches um vertikale Schwenkachsen am Fahrgestellrahmen schwenkbar gelagert ist, nach dem Oberbegriff des Patentanspruches 1.

### [Stand der Technik]

Mit einem derartigen aus der DE-A-42 22 727 bekannten Fahrgestell ist es zwar möglich, beim Transport eines Patienten den Behandlungstisch nicht nur geradeaus zu fahren, sondern ihn auch durch Kurven zu bewegen. Beim Fahren des Behandlungstisches befindet sich ein von einer Schaltstange betätigter Stopperfuß in angehobener Stellung. Dabei befindet sich ein Rastkeil am oberen Ende der Schaltstange in einer dem Keil angepassten Rastaussparung der Nockenscheibe. Um den Behandlungstisch, beispielsweise zur Behandlung und medizinischen Versorgung des Patienten ruhig zu stellen, bedarf es eines erheblichen Kraftaufwandes, um den Rastkeil gegen die Kraft einer Feder aus der Rastausnehmung der Nockenscheibe zu bewegen und den Stopperfuß durch die Schaltstange in Richtung auf den Boden zu bewegen. Ferner steht nur ein begrenzter Schwenkwinkel der Nockenscheibe für diese Bewegung zur Verfügung.

Ferner ist es bekannt, an der Bodenplatte, an welcher das Fahrgestell vorhanden ist, das Fahrrollenpaar anzuheben, so dass die Bodenplatte am Boden aufliegt und damit rutschfrei positioniert ist (EP 0 466 967 B1).

### [Aufgabe der Erfindung]

Aufgabe der Erfindung ist es demgegenüber, ein Fahrgestell der eingangs genannten Art so auszubilden, dass eine rutschfreie Positionierung des Behandlungstisches mit geringem Kraftaufwand erreicht wird.

Diese Aufgabe wird erfindungsgemäß durch die kennzeichnenden Merkmale des Patentanspruches 1 gelöst.

Bei der Erfindung wird gesteuert durch einen Exzenter, welcher einen Exzenterkörper mit kreiszylindrischer Umfangsfläche aufweist, in Richtung der jeweiligen vertikalen Schwenkachse eine Stopperfläche auf dem Boden, auf welchem das Fahrgestell aufsteht, zur rutschfesten Positionierung des Fahrgestells angedrückt. Der Exzenterkörper wird hierzu zwischen der oberen und unteren Position um 180° um die Exzenterwellenachse gedreht. Aufgrund der kreiszylindrischen Umfangsfläche des Exzenterkörpers und des relativ großen Schwenkwinkels von 180° wird eine reibungsarme Bewegungsübertragung auf den die Stopperfläche betätigenden Kolben erreicht. Hierdurch erzielt man einen verschleißarmen Verstellmechanismus. Die der jeweiligen Schwenkachse zugeordnete Fahrrolle wird ganz oder teilweise entlastet. Der Reibschluss zwischen der Stopperfläche und dem Boden bewirkt die rutschfeste Positionierung des Fahrgestells und damit des Behandlungstisches am Boden.

Die jeweilige vertikale Schwenkachse, um welche die zugeordnete Fahrrolle beim Fahren schwenkbar ist, wird durch eine vertikale Achse eines mit dem Fahrgestellrahmen fest verbundenen Hohlzylinders bestimmt. Die jeweilige Fahrrolle ist über einen an der kreiszylindrischen Mantelfläche des Hohlzylinders drehbar gelagerte Lagerhülse am Hohlzylinder schwenkbar um die so definierte vertikale Schwenkachse gelagert. Vorzugsweise ist die jeweilige Laufrolle über eine Radgabel, die fest mit der Lagerhülse verbunden ist, an der Lagerhülse gelagert.

Im Innern des Hohlzylinders ist ein Kolben axial beweglich gelagert. Der Kolben besitzt an seinem unteren Ende die Stopperfläche mit hoher Reibung. Ferner steht der Kolben mit dem am Rahmen um die Exzenterwellenachse drehbar gelagerten Exzenter im Antriebsverbindung. Durch den Exzenter wird der Kolben in eine untere und in eine obere Position im Hohlzylinder gesteuert, wobei der Kolben in axialer Richtung des Hohlzylinders zwischen diesen beiden Positionen bewegt wird. In der oberen Position des Kolbens wird der Fahrgestellrahmen und damit der Behandlungstisch über die Fahrrollen am Boden abgestützt. In der unteren Position des Kolbens wird der Fahrgestellrahmen und damit der Behandlungstisch über die Stopperfläche am Boden rutschfrei abgestützt. Hierzu kann die Stopperfläche an einem bremsenden Belag, beispielsweise in Form von Gummipuffern oder dergleichen vorgesehen sein.

Der Kolben und der mit dem Kolben in Antriebsverbindung stehende Exzenter sind durch eine Federvorspannung in der oberen und in der untern Position stabil gehalten. Die Federvorspannung wirkt vorzugsweise in der axialen Bewegungsrichtung des Kolbens. Vorzugsweise wird der Kolben durch die Federvorspannung in Richtung seiner oberen Position vorgespannt.

Die Exzenterbewegung kann in herkömmlicher Weise über eine Schubstange oder ein gleichwirkendes Schubelement auf den Kolben übertragen werden. Hierzu ist die Schubstange in einer Schubstangenachse am Kolben angelenkt. Sowohl in der oberen Position als auch in der unteren Position des Kolbens sind die Schubstangenachse und der Mittelpunkt des Exzenterkörpers (Exzenterscheibe) in axialer Richtung der Hohlzylinderachse und damit in der Wirkrichtung der Federvorspannung zueinander ausgerichtet. Durch die Federvorspannung werden dabei sowohl der Kolben als auch der Exzenter in stabilen Positionen gehalten. Es ist auch möglich, den Exzenterkörper mit seiner kreiszylindrischen Umfangsfläche an einer am Kolben vorgesehenen Steuerfläche entlang zu bewegen, um die axiale Bewegung des Kolbens zu bewirken.

Um die den beiden Fahrrollen zugeordneten Kolben gleichzeitig aus ihrer oberen Position in ihre untere Position und umgekehrt zu bringen, ist der Exzenter mit einem gemeinsamen Betätigungsbügel verbunden.

Der Behandlungstisch, bei welchem die Erfindung zum Einsatz kommt, dient vorzugsweise als Operationstisch für chirurgische Eingriffe. Er kann jedoch auch für jede andere medizinische Versorgung und auch zur physikalischen Behandlung von Patienten dienen.

### [Beispiele]

Anhand der Figuren wird an einem Ausführungsbeispiel die Erfindung noch näher erläutert. Es zeigt:
- Figur 1: einen Fahrgestellrahmen mit einem Fahrrollenpaar, bei welchem die Erfindung zur Anwendung kommt, in perspektivischer Darstellung;
- Figur 2: eine schnittbildliche Darstellung durch eine Rollenlagerung am Fahrgestellrahmen mit Exzenter-Verstelleinrichtung zum rutschfesten Positionieren des Fahrgestells am Boden; und
- Figur 3: eine weitere Ausführungsform einer Verstelleinrichtung.

Das dargestellte Ausführungsbeispiel eines Fahrgestells für einen Behandlungstisch besitzt einen Fahrgestellrahmen 3, an welchem in Befestigungsstellen 21 eine nicht näher dargestellte Bodenplatte oder Grundplatte des Behandlungstisches befestigt wird. Am Fahrgestellrahmen 3 sind um vertikale Schwenkachsen 2 zwei Fahrrollen 1 schwenkbar gelagert. Die Fahrrollen 1 sind drehbar an Radgabeln 17 befestigt. Die Radgabeln 17 sind an den Umfang von Lagerhülsen 5 angeformt oder mit den Lagerhülsen 5 befestigt. Die Radgabeln 17 erstrecken sich etwa tangential zu den Außenflächen der Lagerhülsen 5.

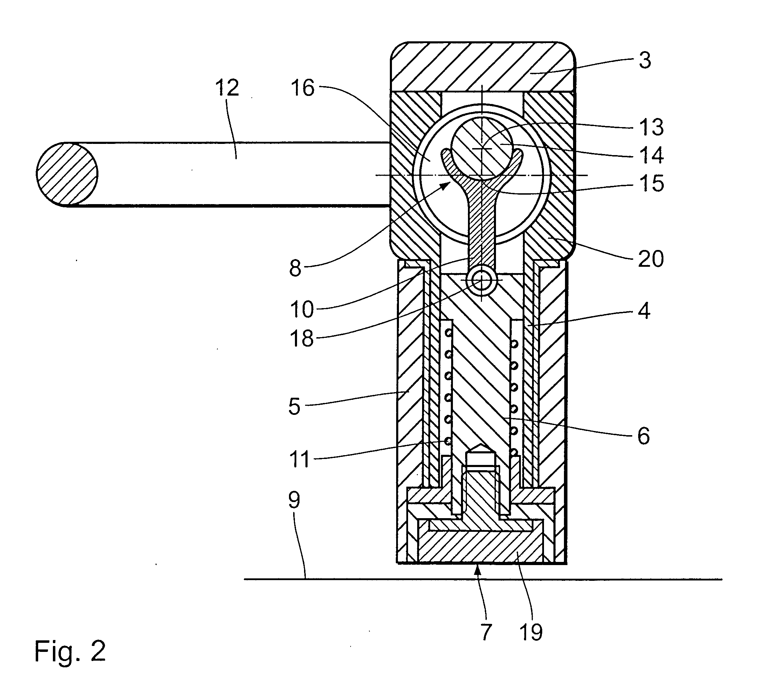

Die Lagerhülsen 5 sind wie aus der Figur 2 zu ersehen ist, an der kreiszylindrischen Mantelfläche eines Hohlzylinders 4 drehbar gelagert. Die Achse des jeweiligen Hohlzylinders 4 definiert die vertikale Schwenkachse 2. Der Hohlzylinder 4 besteht aus einem Stück mit einem Exzentergehäuse 20 oder ist mit diesem fest verbunden. Das Exzentergehäuse 20 ist seinerseits fest mit dem Fahrgestellrahmen 3 verbunden. Durch die schwenkbare Lagerung der Fahrrollen 1 kann der am Fahrgestell abgestützte Behandlungstisch nicht nur geradeaus, sondern auch in Kurven bewegt werden.

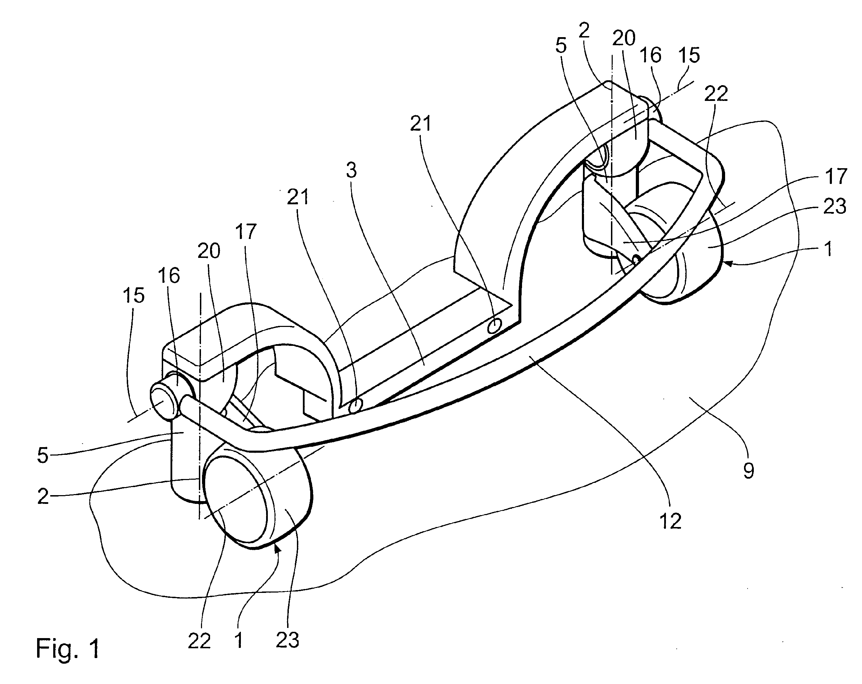

Im Innern des Hohlzylinders 4 ist ein Kolben 6 axial beweglich gelagert. Der Kolben 6 besitzt an seinem unteren Ende einen Gummipuffer 19 mit einer unten liegenden Stopperfläche 7 mit hoher Reibkraft gegenüber einem Boden 9. Der Kolben 6 steht ferner in Antriebsverbindung mit einem Exzenter 8. Der Exzenter 8 besitzt eine Exzenterwelle 16, die mit einem Betätigungsbügel 12 fest verbunden ist. Wie aus der Figur 1 zu ersehen ist, ist der Betätigungsbügel 12 mit beiden Exzenterwellen 16, welchen den beiden Rollen 1 zugeordnet sind, verbunden. Auf diese Weise erreicht man eine gemeinsame Betätigung der Exzenter 8 an beiden Seiten des Fahrgestells. Die Exzenterwelle 16 ist im Exzentergehäuse um eine Exzenterwellenachse 15 drehbar gelagert. Der Exzenter 8 besitzt einen Exzenterkörper 14, insbesondere Exzenterscheibe mit kreiszylindrischer Umfangsfläche, deren Extenterkörperachse 13 außerhalb, d. h. exzentrisch zur Exzenterwellenachse 15 liegt. An den Exzenterkörper 14, welcher als kreisrunde Exzenterscheibe ausgebildet sein kann, liegt auch mit Formschluss eine Schubstange 10 an, die den Exenterkörper 14 mit dem Kolben 6 verbindet. Hierzu ist die Schubstange 10 in einer Schubstangenachse 18 am Kolben 6 angelenkt. Hierdurch wird die Drehbewegung des Exzenterkörpers 14 um die Exzenterwellenachse 15 in eine geradlinige Bewegung des Kolbens 6 im Hohlzylinder 4 umgewandelt.

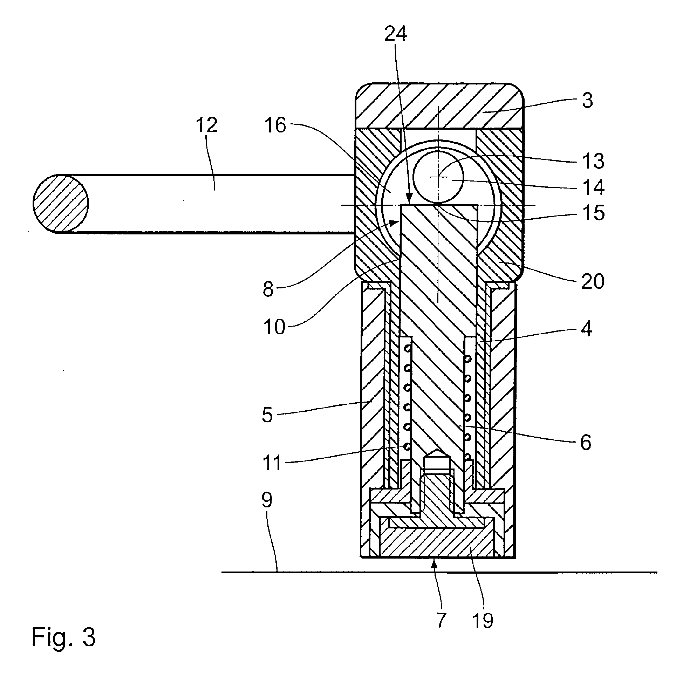

Bei dem in der Figur 3 dargestellten Ausführungsbeispiel ist an den Kolben 6 eine Steuerfläche 24 angeformt, entlang welcher der Exzenterkörper 14 beim axialen Verschieben des Kolbens bewegt wird.

Mit Hilfe des Exzenters und des starr mit der Exzenterwelle 16 verbundenen Betätigungsbügels 12 kann der Kolben 6 in zwei Positionen gebraucht werden. Die erste oben liegende Position des Kolbens 6 ist in den Figuren 2 und 3 dargestellt. In dieser Position ist der Gummipuffer 19 in der vom Boden 9 abgehobenen Position. Das Fahrgestell und damit der Behandlungstisch werden über die Fahrrollen 1 am Boden 9 abgestützt. Beim Transport bewegen sich die Fahrrollen 1 um ihre Fahrrollenachsen 22. Die Fahrrollen 1 sind hierzu mit einem glatten Fahrrollenbelag 23 ausgestattet, der leicht zu reinigen ist.

Um das Fahrgestell und den Behandlungstisch rutschfest am Boden 9 zu positionieren, wird der Kolben 6 in seine untere Position durch Betätigen des Exzenters gebracht. Hierbei wird der Gummipuffer 19 mit seiner unten liegenden Stopperfläche auf den Boden 9 aufgesetzt und die Fahrrollen 1 werden gegebenenfalls mit Bodenberührung entlastet oder mit ihrem Rollenbelag 23 vom Boden 9 abgehoben. Hierzu wird der Betätigungsbügel 12, aus der in den Figuren 1 und 2 dargestellten Position um 180° geschwenkt. Dabei wird der Exzenterkörper 14 aus seiner oberen Position (12 Uhr-Position) in seine unterste Position (6 Uhr-Position) bezüglich der Exzenterwellenachse 15 gebracht. Wie schon erläutert wird dies Halbkreisbewegungen des Exzenterkörpers 14 in Figur 2 über die Schubstange 10 auf den Kolben 6 übertragen, so dass dieser axial nach unten in die schon angesprochene Position bewegt wird, in welcher der Gummipuffer 19 mit seiner Stopperfläche 7 auf den Boden 9 aufsteht und die Fahrrollen 1 vom Boden 9 abgehoben sind. Bei der Ausführungsform der Figur 3 wird der Exzenterkörper 14 hierzu entlang der Steuerfläche 24 geführt und der Kolben in der unteren Position (6 Uhr-Position) des Exzenterkörpers 14 in seine untere Position gebracht.

Sowohl in der oberen Position des Kolbens 6, in welcher der Exzenterkörper 14 mit seiner Exzenterkörperachse 13 in der 12 Uhr-Position oberhalb der Exzenterwellenachse 15 sich befindet, als auch in der unteren Position des Exzenterkörpers 14, in welcher sich dieser mit seiner Exzenterkörperachse 13 in der 6 Uhr-Position unterhalb der Exzenterwellenachse 15 befindet, sind in der Figur 2 die Schubstangenachse 18, die Exzenterwellenachse 15 und die Exzenterkörperachse 13 axial in Richtung der axialen Bewegung des Kolbens 8 zueinander ausgerichtet. In der Figur 3 sind die Exzenterkörperachse 13 und die Exzenterwellenachse 15 in der axialen Bewegungsrichtung des Kolbens 6 ausgerichtet.

Auf den Kolben 6 wirkt im Hohlzylinder 4 eine Feder 11, welche eine Federvorspannung erzeugt. Die Federvorspannung ist axial zur Achse des Hohlzylinders 4 ausgerichtet. Durch die Federvorspannung wird der Kolben 6 in seine obere in den Figuren 2 und 3 dargestellte Position vorgespannt. Hierdurch ist gewährleistet, dass für den normalen Fahrbetrieb des Fahrwerks die Stopperfläche 7 vom Boden 9 abgehoben ist. Ferner wird die aus dem Exzenter 8 und dem Kolben 6 bestehende Anordnung in der jeweiligen Position, d. h. in der - oberen und unteren Position stabil gehalten.

Durch die Erfindung ist es nicht erforderlich zur rutschfesten Anordnung des Behandlungstisches am Boden 9 auf die Rollen 1 einwirkende Bremsen, welche insbesondere am Rollenbelag angreifen, zu verwenden. Durch die Erfindung ist vielmehr gewährleistet, dass der Rollenbelag 23 glatt bleibt und somit immer leicht gereinigt werden kann. Der Rollenbelag 23 wird durch das rutschfeste Positionieren des Behandlungstisches am Boden 9 nicht beeinträchtigt.

### [Bezugszeichenliste]

- 1: Fahrrolle
- 2: vertikale Schwenkachse
- 3: Fahrgestellrahmen
- 4: Hohlzylinder
- 5: Lagerhülse
- 6: Kolben
- 7: Stopperfläche
- 8: Exzenter
- 9: Boden
- 10: Schubstange
- 11: Feder (Federvorspannung)
- 12: Betätigungsbügel
- 13: Exzenterkörperachse
- 14: Exzenterkörper
- 15: Exzenterwellenachse
- 16: Exzenterwelle
- 17: Radgabel
- 18: Schubstangenachse
- 19: Gummipuffer
- 20: Exzentergehäuse
- 21: Befestigungsstelle
- 22: Rollenachse
- 23: Rollenbelag
- 24: Steuerfläche

## Patentansprüche

1. Fahrgestell für einen Behandlungstisch, insbesondere für chirurgische Eingriffe, mit einem Fahrrollenpaar (1), welches um vertikale Schwenkachsen (2) am Fahrgestellrahmen (3) schwenkbar gelagert ist, wobei
- jede der beiden Schwenkachsen (2) durch eine vertikale Achse eines mit dem Rahmen (3) fest verbundenen Hohlzylinders (4) bestimmt ist;
- die jeweilige Fahrrolle (1) über eine Lagerhülse (5) am Hohlzylinder um die vertikale Schwenkachse (2) schwenkbar gelagert ist;
- im Inneren des Hohlzylinders (4) ein Kolben entlang der vertikalen Achse beweglich gelagert ist;
- der Kolben (6) an seinem unteren Ende eine Stopperfläche (7) aufweist;
- am oberen Ende des Kolbens ein Exzenter (8) um eine Exzenterwellenachse (15) in einem Exzentergehäuse (20) drehbar gelagert ist und mit einem Exzenterkörper (14) in Antriebsverbindung mit dem Kolben (6) steht;
- der Kolben (6) gesteuert durch den Exzenter (8) in eine untere und eine obere Position im Hohlzylinder (4) bewegbar ist;
- in der oberen Position des Kolbens (6) der Fahrgestellrahmen (3) über die Fahrrollen (1) am Boden (9) abgestützt ist;
- in der unteren Position des Kolbens (6) der Fahrgestellrahmen (3) über die Stopperfläche (7) am Boden abgestützt ist; und
- auf den Kolben (6) in Richtung auf seine obere Position eine Federvorspannung wirkt,
**dadurch gekennzeichnet, dass**
der Exzenterkörper (14) eine kreiszylindrische Umfangsfläche aufweist, und
- der Exzenterkörper (14) beim Wechsel des Kolbens (6) zwischen der oberen und unteren Position um 180° um die Exzenterwellenachse (15) gedreht ist.

2. Fahrgestell nach Anspruch 1, **dadurch gekennzeichnet, dass** auf den Kolben (6) in Richtung auf seine obere Position eine Federvorspannung wirkt.

3. Fahrgestell nach Anspruch 1 oder 2, **dadurch gekennzeichnet, dass** die Federvorspannung in Richtung der axialen Bewegung des Kolbens (6) wirkt.

4. Fahrgestell nach einem der Ansprüche 1 bis 3, **dadurch gekennzeichnet, dass** die Exzenterachse (13) und die Exzenterwellenachse (15) in der oberen und in der unteren Position des Kolbens (6) in der axialen Bewegungsrichtung des Kolbens (6) zueinander ausgerichtet sind.

5. Fahrgestell nach einem der Ansprüche 1 bis 4, **dadurch gekennzeichnet, dass** die beiden dem Fahrrollenpaar (1, 1) zugeordneten Exzenter (8) durch einen gemeinsamen Betätigungsbügel (12) betätigbar sind.

6. Fahrgestell nach einem der Ansprüche 1 bis 5, **dadurch gekennzeichnet, dass** der Exzenterkörper (14) mit seiner kreiszylindrischen Umfangfläche an einer Steuerfläche (24) am Kolben (6) entlang bewegbar ist.
